(19) Europäisches Patentamt
European Patent Office
Office européen des brevets

(11) **EP 3 376 665 B1**

(12) **EUROPEAN PATENT SPECIFICATION**

(45) Date of publication and mention
of the grant of the patent:
**02.06.2021 Bulletin 2021/22**

(51) Int Cl.:
*H02P 29/024* *(2016.01)* *G01M 13/02* *(2019.01)*
*H02P 21/00* *(2016.01)*

(21) Application number: **18160752.4**

(22) Date of filing: **08.03.2018**

(54) **DRIVE BELT DETECTOR**

ANTRIEBSRIEMENDETEKTOR

DÉTECTEUR DE COURROIE D'ENTRAÎNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2017 DK 201770179**

(43) Date of publication of application:
**19.09.2018 Bulletin 2018/38**

(73) Proprietor: **OJ Electronics A/S
6400 Sønderborg (DK)**

(72) Inventors:
• **PETERSEN, Jörn
6400 Sønderborg (DK)**
• **LAURITSEN, Kim
6400 Sønderborg (DK)**

(74) Representative: **Zacco Denmark A/S
Arne Jacobsens Allé 15
2300 Copenhagen S (DK)**

(56) References cited:
**EP-A1- 1 366 346      EP-A1- 3 093 983
WO-A1-2006/029608    WO-A1-2013/027527**

**Description**

The present disclosure relates to a method for detecting a faulty drive belt in a motor system comprising a rotational heat exchanger, the rotational heat exchanger being coupled to a rotor of a motor by a drive belt, such that rotation of the rotor causes rotation of the rotational heat exchanger, the motor being connected to a processing unit, which processing unit is provided with sensorless Field-Oriented-Control (FOC).

The present disclosure also relates to an associated motor system comprising a rotational heat exchanger, the rotational heat exchanger being coupled to a rotor of a motor by a drive belt, such that rotation of the rotor causes rotation of the rotational heat exchanger, the motor being connected to a processing unit, which processing unit is provided with sensorless Field-Oriented-Control (FOC).

BACKGROUND

Detectors of faulty or missing drive belts are known in different shapes. In a simple form a detector can be a mechanical detector pressing against the drive belt by spring action.

Another option to monitor or check a drive belt is by using a sensor and a kind of trigger to ensure that a load is turning. The sensor or the trigger can be mounted on the load while the other one is arranged on a stationary part somewhere near the load. The sensor will detect the trigger when they pass each other, thus generating a signal representing the rotational or turning speed of the load.

The sensors used in such systems can be magnetic sensors, optical sensors, mechanical sensors, etc.

Such monitoring systems suffer from several drawbacks, such as being exposed to mechanical damage or fouling, thus weakening, interrupting or even cutting off the signal.

From EP 1 36 346 B1 is known a method for monitoring and testing, during operation, the serviceability of a transmission part arranged for transmission of torque between an electric motor and a load. This solution still suffers from having an external speed sensor determining the speed of the motor.

The problem to be solved by the method is to provide a monitoring system that presents a low percentage of false fault alarms.

This is solved by a method for monitoring the serviceability of a transmission part arranged for transmission of torque between an electric motor and a load during operation comprising the steps of: initiating at least one test sequence, and sending a signal indicating an error if said at least one test sequence indicates that the serviceability of the transmission part is not acceptable and if no further test sequences are to be performed, wherein said at least one test sequence includes the steps of: setting a rotation speed of the electric motor at a test rotation speed, which differs from the rotation speed of the electric motor immediately prior to said setting, performing at least one measurement at the electric motor, within a period starting from the setting of the rotation speed of the motor and ending when the rotation speed of the electric motor has reached the test rotation speed.

EP 1 36 346 B1 also mentions a control device for electric motors The control device comprises means for sensing the torque of an electric motor during operation, and is characterised in that it comprises: means for performing at least one test sequence, and means for sending a signal indicating an error if said at least one test sequence indicates that the serviceability of the transmission part is not acceptable and if no further test sequences are to be performed, wherein said means for performing at least one test sequence includes: means for setting a rotation speed of the electric motor at a test rotation speed, which differs from the rotation speed of the electric motor immediately prior to said setting, means for performing at least one measurement, within a period starting from the setting of the rotation speed of the motor and ending when the rotation speed of the electric motor has reached the test rotation speed.

Here at least one test sequence is performed in order to detect if the system works as planned. Testing the system according to the method and the control device mentioned in EP 1 36 346 B1 requires significant changes in the rotational speed of the motor and thereby changes in the rotational speed of the equipment or load driven by the motor via a transmission part, which transmission part can be a transmission belt. It is even suggested that the direction of rotation is changed. In case the load is a heat exchanger rotor it is undesirable to change the speed because it can cause significant deviations of the functions of the heat exchanger, such as completely loss of performance of the overall ventilation system during time of test.

The solution is set to perform at least one measurement of the torque at the electric motor, within a period starting from the setting of the rotation speed of the motor and ending when the rotation speed of the electric motor has reached the test rotation speed, thus changing the rotation speed of the heat exchanger.

Further the solution requires a calibration of the entire system taking the electric motor, the transmission and the load into consideration.

EP 1 36 346 discloses the features in the preamble of claim 1.

From US 5,281,956 A is known a method for detecting a faulty drive belt in a motor system comprising a rotational heat exchanger, the rotational heat exchanger being coupled to a rotor of a motor by a drive belt such that rotation of the rotor causes rotation of the rotational heat exchanger, the motor being connected to a processing unit, comprising the steps of:

- obtaining the variation in the phase difference between the motor voltage and the motor current over a specific time period, this variation being indicative of the motor torque variation over the same time period,
- comparing the variation in phase difference with a specific threshold value.

A drawback of such a solution is that it depends on the the characteristics of the elements involved, for example the load from the heat exchanger.

From WO 2006/029608 A1 is known a method for detecting a drive belt malfunction in an asynchronous motor which is operated by a frequency converter under standard parameters to drive a rotary heat exchanger. The parameters of the frequency converter are periodically changed to test parameters, thereby allowing to start the asynchronous motor running until it reaches a desired speed, to monitor the moment of tilt and detect that the drive belt does not transmit forces onto the rotor if the moment of tilt is not reached, or to detect that the rotor of the rotary heat exchanger is driven by the drive belt if the moment of tilt is exceeded.

Here torque is used to determine if the V-belt is broken, but the test sequence requires that the test is runned from start of the motor, then the motor is stopped and the test is runned again. It is not possible to monitor during normal use.

SUMMARY

In order to achieve a more reliable, less intrusive and less expensive solution in relation to fault detection of a belt drive for a rotational heat exchanger, the belt detector/monitor has been implemented into a processing unit which controls speed of a motor by a method of sensorless Field-Oriented-Control (FOC). Further a new method has been developed in order to minimise influence of change in speed of the rotational heat exchanger.

The present disclosure provides a way to detect a faulty drive belt between a rotor of a motor and a rotational heat exchanger.

The present invention is defined in the independent claims 1, 6 with preferred embodiments disclosed in the dependent claims.

Hereby it is possible to detect a faulty drive belt immediately during normal operation.

A motor suitable for this purpose may be a stepmotor comprising a rotor having at least one permanent magnet and a stator configured to provide a magnetic field for rotation of the rotor, and wherein the magnetic field is controlled by a q-current and a d-current. The q-current controls a q-component of the magnetic field causing torque on the rotor. The d-current controls a d-component of the magnetic field perpendicular to the q-component, e.g. changing the magnetic flux. Such motor control is known as Field-Oriented-Control (FOC).

Other electric motors may also be suitable as long as they can be controlled by the processing unit.

A faulty drive belt can be defined as a drive belt which is so loose that the rotor of the motor, and thereby a pulley attached to a motor shaft is rotating at a higher speed than the drive belt, or that the belt is torn, ripped apart or missing.

To be able to detect a faulty drive belt a method is provided where an alarm is generated based on a detection regularly in intervals during normal operation on the "OPERATION" state, to detect a faulty drive belt. Such intervals are every 5 to 60 seconds, preferably 10 seconds.

The object is to provide a reliable detection of a faulty drive belt which system can be implemented as smooth as possible. By implementing the disclosed system, a calibration of the whole system is unnecessary, since behaviour of the motor and the attached pulley can be tested and calibrated before sale of the drive unit. In the ideal situation calibration can be avoided.

Hereby it is avoided that the complete system has to be known before drive unit formed by motor comprising processing unit and pulley can be adapted to a rotational heat exchanger.

During normal operation, a PID-controller will regulate the current request to the motor depending on the measured speed of the motor. A speed increase will result in a reduction of the current request and a speed decrease will result in a rise of the current request. By bypassing the PID-controller and directly changing the current request it is possible to see how fast the system accelerates and based on knowledge on the inertia of the motor and pulley, it is possible to measure the acceleration within a defined interval to see if the acceleration corresponds to the motor and pulley running with no load or if the acceleration corresponds to additional inertia from the rotational heat exchanger.

BRIEF DESCRIPTION OF THE DRAWINGS

The above and other features and advantages of the present invention will become readily apparent to those skilled in the art by the following detailed description of exemplary embodiments thereof with reference to the attached drawings, in which:

Figure 1 schematically illustrates an exemplary motor system;

Figure 2 shows exemplary traces of motor data;

Figure 3 shows exemplary traces of motor data;

Figure 4 shows exemplary traces of motor data;

Figure 5 shows exemplary traces of motor data; and

Figure 6 shows exemplary traces of motor data.

DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention. The scope of protection is defined in the appended claims.

Throughout, the same reference numerals are used for identical or corresponding parts.

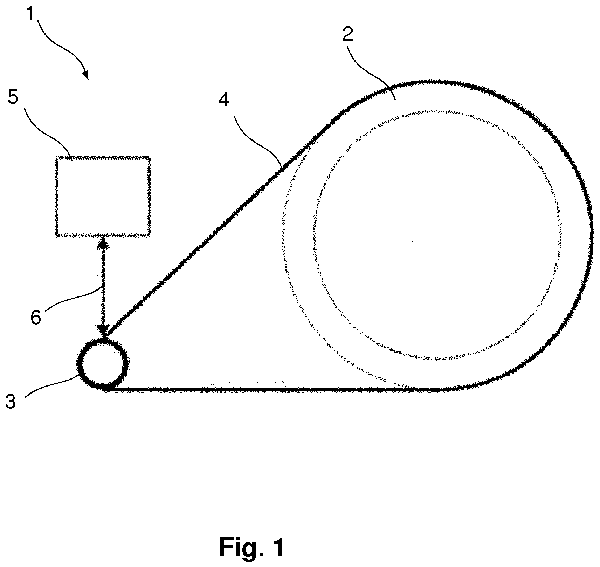

Fig. 1 schematically illustrates a motor system 1. The motor system 1 comprises a rotational heat exchanger 2 and a motor 3 comprising a rotor having at least one permanent magnet and a stator configured to provide a magnetic field for rotation of the rotor, which rotor part of the motor 3 is connected in a drive connection with the rotational heat exchanger 2 by a drive belt 4. Hence, rotation of the rotor of the motor 3 will cause rotation of the rotational heat exchanger 2 by the drive belt 4.

A processing unit 5 is configured to control the motor 3. The processing unit 5 is connected to the motor 3 in order to transmit and receive signals 6 to/from the motor 3. The processing unit 5 comprises or communicates with controllers in the system 1.

On a shaft being a rotational axis of the rotor of the motor 3 a pulley can be placed, which pulley forms a rotational connection with the drive belt in order to rotate the rotational heat exchanger 2.

An example of operation of a motor system comprising a rotational heat exchanger can be as follows: A Rotational Heat eXchanger (RHX) is used in Air Handling Units (AHUs) to re-use heat from exhaust air in supply air in a building.

On the motor shaft or rotor axle a pulley can be mounted, a round, V-shaped or flat drive band/belt can be used to transfer rotation from the rotor to the rotational heat exchanger 2.

The rotational heat exchanger 2 normally rotates at a speed between of 0.1 to 40 RPM. Between the rotational heat exchanger 2 and the motor can be an exchange of approx. 10 caused by a difference in diameter of the driving pulley and diameter of the rotational heat exchanger 2. This means that the motor 3 in this example rotates with a number of revolutions being approx.10 times higher than the rotational heat exchanger 2. The exchange of 10 between is an example. The exchange will always be in such a relation that the motor will rotate with a higher number of revolutions than the rotational heat exchanger.

In an example the processing unit 5 can be designed for controlling a motor. The speed can be controlled via a 0-10V or Modbus signal to the processing unit 5. It is to be understood that this is only an example and that the processing unit can be adapted for other controlled motors and that the speed can be controlled via any communication media or signal to the processing unit 5.

A method for detecting a faulty drive 4 in a motor system 1 comprising a rotational heat exchanger 2, the rotational heat exchanger 2 being coupled to a rotor of a motor 3 by a drive belt 4, such that rotation of the rotor causes rotation of the rotational heat exchanger 2, the motor 3 being connected to a processing unit 5, which processing unit 5 is provided with sensorless Field-Oriented-Control (FOC) is explained in the following.

In case the drive belt becomes faulty, it is important for the performance of the system 1 that an error message is generated so that the system 1 can be brought into correct function again.

As an example a faulty belt causing a malfunction can be in cases where ambient temperature is so low that freezing of liquid in the ventilation system e.g. an Air Handling Unit (AHU) can occur.

A faulty drive belt can be defined as a drive belt which is so loose that the rotor of the motor, and thereby the pulley is rotating at a higher speed than the drive belt, or that the belt is torn, ripped apart or missing.

To be able to detect a faulty drive belt a method is provided where an alarm is generated based on a detection regularly in intervals during normal operation on the "OPERATION" state, to detect a faulty drive belt. Such intervals are every 5 to 60 seconds, preferably 10 seconds.

The different accelerations of the motor 3 with and without the drive belt 4 are caused by the different inertias of the system 1. Therefore a missing drive belt 4 can be detected by applying a step to the current request and measuring the acceleration of the motor.

By applying such a current step it is possible to see how fast the system accelerates and based on knowledge on the inertia of the motor and pulley, it is possible to measure the acceleration within a defined interval to see if the acceleration corresponds to the motor and pulley running with no load or if the acceleration corresponds to additional inertia from the rotational heat exchanger.

As accelerating the rotational heat exchanger 2 may disturb proper operation of the rotational heat exchanger 2 and thereby the complete ventilation system, it is preferred to apply a minimum acceleration, while still being able to detect a torn drive belt.

It is assumed that an acceleration of 1 RPM during 100 ms corresponding to 1,05 mechanical radian per second would not affect the operation of the rotational heat exchanger significantly.

Using the regulation system of a speed controller would introduce a delay to the speed step response, so instead of increasing the speed request with 1 RPM in 100 ms (1,05 mechanical radian per second), the required current to increase the speed with 1 RPM in 100 ms (1,05 mechanical radian per second) is calculated and set directly as the current request for current control in the processing unit 5.

The required additional current to accelerate the rotor with 1 mechanical radian per second can be calculated using the motor and rotor parameters, with the following formula:

$$\text{Stepsize in [A]} = \left(\text{Inertia of Rotor [kg} \times \text{m}^2]\right)/\left(\text{Torque constant of Motor [Nm/A]}\right)$$

For example, a rotor with an inertia of 0.07 [kg x m$^2$] driven by a motor with a torque constant of 2.55 [Nm/A] requires a current step of 0.027 [A] for an acceleration of 1 mechanical radian per second, corresponding to 0,95 RPM per 100 ms

As a starting point the inertia of the rotor of the rotating heat exchanger was used.

Taking starting point in the inertia of the motor and pulley 3 instead, it is possible to determine if the acceleration within a defined interval corresponds to the motor and pulley 3 running with no load or if the acceleration corresponds to additional inertia from the rotational heat exchanger 2. Hereby it is not necessary to know the inertia of the equipment driven by the motor 3 and pulley.

If the drive belt 4 is not mounted on the motor pulley 3, the inertia of the system 1 will be much lower and the acceleration will be much higher when applying the current step.

For being able to deal with speed variations caused by rotational heat exchanger 2 and the speed controller, a limit value has been defined for the motor.

This parameter can be used to set a maximum speed step, which will be accepted after applying the current step.

A speed increase above this value will trigger the "Internal rotor guard" alarm.

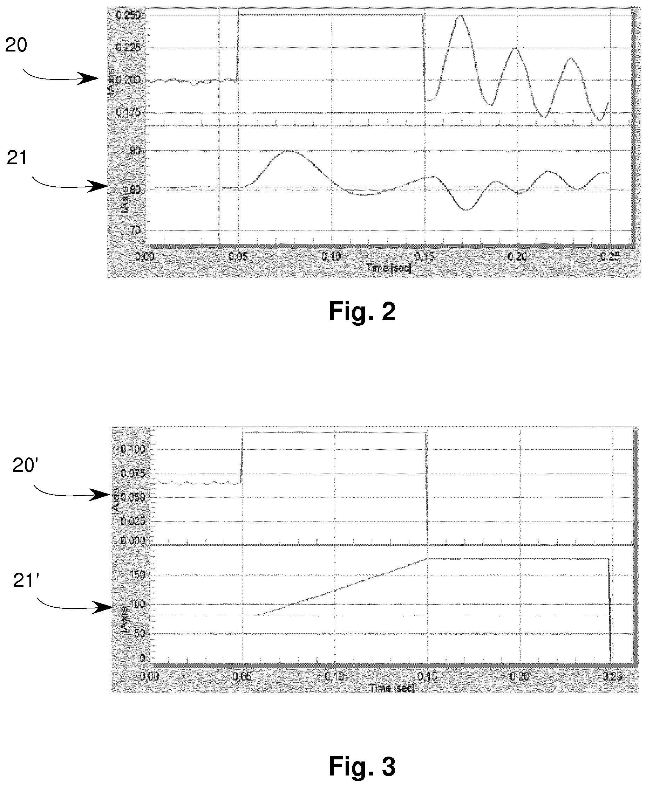

Figure 2 shows an example of a response 21 to a sudden step 20 in the current request of 25% (from 200 mA to 250 mA) while the drive belt is mounted. In this case it can be seen that the small change of speed 21 of the motor do not change the speed of the rotating heat exchanger significantly. Small fluctuations of the speed shown in the figure are due to the elasticity of the drive belt and it can be seen from the figure that fluctuation abates quickly.

Figure 3 shows the same current step 20' without the mounted drive belt 4. In this case, in approximately 100 ms the motor accelerates with almost 100 RPM, which can be seen in 21'.

During "STARTUP" state of the system 1, the controller or processing unit 5 will use a fixed current request for the motor 3 also called open loop.)

This current need to be high enough to make the motor 3 rotate with any load, so the fixed current request will always be higher than the current actually required entering "STARTUP" state.

When in "OPERATION" state, the controller or processing unit 5 will adjust the motor current so it is able to maintain the requested speed independently of the actual load of the motor, called closed loop. If the motor current is higher than required, the motor will increase its speed and accelerate very fast.

When switching from the "STARTUP" to the "OPERATION" state, the motor current has to be reduced from the fixed "STARTUP" current to a current actually required to run the motor 3 at the requested speed. This is handled via a Proportional Integral Derivative controller (PID controller) with some delay, so the motor current will be too high for some time, which will cause the motor to accelerate.

The acceleration will be depending on the inertia on the motor 3, so a motor 3 without a drive belt 4 and a rotational heat exchanger 2 connected will accelerate significantly faster than a motor 3 with the expected inertia.

In the method, this is implemented by measuring the increase of the actual motor speed within 200 ms or already after 100 ms after entering the "OPERATION" state.

If this speed increase is above a specified level, it is assumed that there is no load on the motor and that the drive belt is torn.

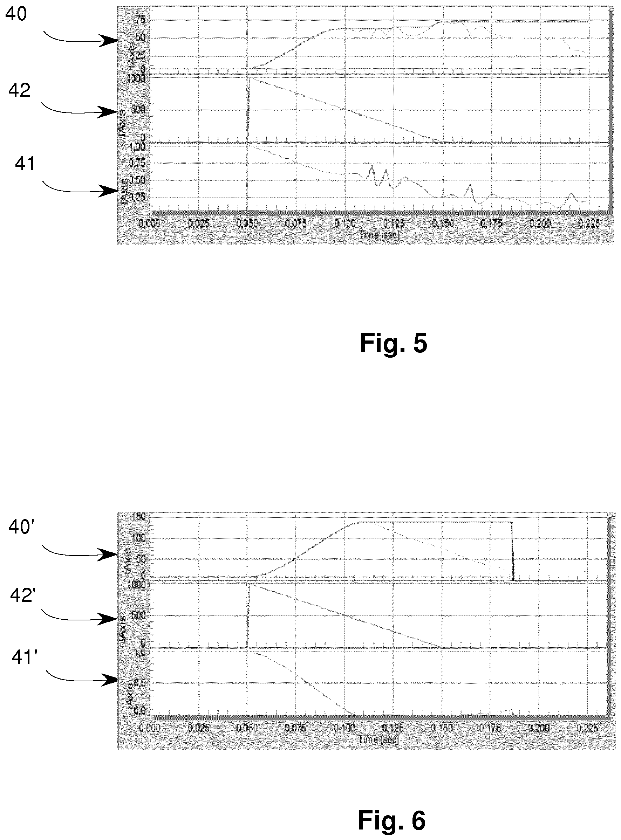

Figure 5 shows an example of the speed 40 and current 41 in a transition from "STARTUP" (open loop) to "OPERATION" (closed loop) with a drive belt. It can be seen that immediately after the transition, the speed 40 increases to approx. 75 RPM and the current 41 decreases. A curve 42 in the middle of the figure shows a counter used to measure time immediately after the transition.

Figure 6 shows same situation as in figure 5, but with no drive belt. It can be seen that immediately after the transition, the speed 40' increases to approx. 150 RPM and the current 41' decreases faster that with a drive belt mounted. The curve 42' in the middle of the figure shows the counter used to measure time immediately after the transition.

When the system 1 is in the "OPERATION" state the motor current calculated by the processing unit 5 will be depending on the actual load on the system 1.

If the drive belt 4 is torn apart, the load will be reduced suddenly and as the PID-controller requires some time to adjust the motor current, the motor current will be too high for the requested motor speed and the motor will accelerate.

Afterwards the PID-controller will adapt to the reduced load by reducing the motor current and the motor speed will settle on its requested value.

In an alternative a faulty drive belt can be detected by a method where an alarm is generated based on a detection of a sudden increase in motor speed, followed by a loss of required motor current ("load drop detection").

This scenario will happen, if the drive belt 4 is ripped apart during normal operation.

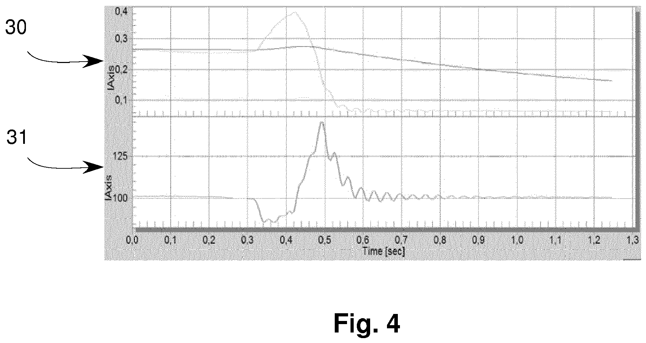

An example of such a scenario is shown in figure 4, showing the reaction from the controller/processing unit 5. Here removal of the drive belt 4 is caused by influence from a small object in order to simulate a drive belt ripped apart, why the speed 31 briefly decreases from 100 RPM to approx. 85 RPM and following increases to approx. 145 RPM. After this point the speed is regulated back to 100RPM by the processing unit 5. It can be seen that the current 30 falls from approx. 250 mA when the drive belt 4 is still in place to approx. 80 mA when the drive belt 4 is missing (faulty).

This "load drop" could also be caused by other incidents, but in the present system 1 such incidents are usually happening over a longer period of time, while the load drop caused by a torn drive belt will happen very fast (less than one second).

In the method, this is implemented by continuously measuring the actual motor speed and if the speed increases with more than a defined value within 100 ms, the method will check the required motor current within the following 300 ms. If the required motor current is reduced to less than half of the motor current required before the speed increase, it is assumed that the load drop is caused by a torn drive belt 4.

**Claims**

1. A method for detecting a faulty drive belt (4) 2. of a motor system (1) comprising a rotational heat exchanger (2), the rotational heat exchanger (2) being coupled to a rotor of a motor (3) by a drive belt (4), such that rotation of the rotor causes rotation of the rotational heat exchanger (2), the motor (3) being connected to a processing unit (5), **characterized by** comprising the step of measuring regularly in intervals every 5 to 60 seconds a step response of acceleration of the motor after having applied a sudden increase of motor current request and in that
   the processing unit (5) is provided with sensorless Field-Oriented-Control controlling motor (3).

2. Method according to claim 1, further comprising:

   - detection of a speed step directly after a change from "open loop" , "STARTUP" state, to "closed loop" , "OPERATION" state.

3. Method according to claim 1 or 2, further comprising:

   - detection of a sudden increase in motor speed, followed by a loss of required motor current, "load drop detection".

4. Method according to claim 2, further comprising:

   - measuring if actual motor speed increases within 200 ms after entering "OPERATION" state.

5. Method according to claim 3, further comprising the steps of:

   - continuously measuring actual motor speed, and

- if the speed increases by more than a defined value within 100 ms, check the required motor current within the following 300 ms; and
- if the required motor current is reduced to less than half of the motor current required before the speed increase, it is assumed that the load drop is caused by a torn drive belt (4).

6. A motor system comprising:

- a rotational heat exchanger (2), the rotational heat exchanger (2) being coupled to a rotor of a motor (3) by a drive belt (4), such that rotation of the rotor causes rotation of the rotational heat exchanger (2);
- the motor (3) being connected to a processing unit (5);

**characterized in that** the processing unit (5) is configured to measure regularly in intervals every 5 to 60 seconds a step response of acceleration of the motor after having applied a sudden increase of motor current request and **in that**
the processing unit (5) is provided with sensorless Field-Oriented-Control controlling motor (3).

7. Motor system according to claim 6, the processing unit (5) further being configured to:

- detect a speed step directly after a change from "open loop" , "STARTUP" state, to "closed loop" , "OPERATION" state.

8. Motor system according to claim 6 or 7, the processing unit (5) further being configured to:

- detect a sudden increase in the motor speed, followed by a loss of required motor current, "load drop detection".

9. Motor system according to claim 7, the processing unit (5) further being configured to:

- measure if actual motor speed increases within 200 ms after entering "OPERATION" state.

10. Motor system according to claim 8, the processing unit (5) further being configured to:

- continuously measure actual motor speed; and
- if the speed increases by more than a defined value within 100 ms, check the required motor current within the following 300 ms; and
- if the required motor current is reduced to less than half of the motor current required before the speed increase, it is assumed that the load drop is caused by a torn drive belt (4).

**Patentansprüche**

1. Verfahren zum Detektieren eines defekten Antriebsriemens (4) eines Motorsystems (1) umfassend einen drehbaren Wärmetauscher (2), wobei der drehbare Wärmetauscher (2) mit einem Rotor eines Motors (3) durch einen Antriebsriemen (4) gekoppelt ist, so dass eine Drehung des Rotors eine Drehung des drehbaren Wärmetauschers (2) bewirkt, wobei der Motor (3) mit einer Verarbeitungseinheit (5) verbunden ist, **dadurch gekennzeichnet, dass** es den Schritt des regelmäßigen Messens in Intervallen jede 5 bis 60 Sekunden einer Schrittbeschleunigungsantwort des Motors umfasst, nachdem eine plötzliche Steigerung von Motorstrom eingesetzt worden ist, und dass die Verarbeitungseinheit (5) mit einem sensorfreien Steuerungsmotor (3) der feldorientierten Regelung versehen ist.

2. Verfahren nach Anspruch 1, ferner umfassend:

- das Detektieren eines Geschwindigkeitsschritts unmittelbar nach einer Änderung vom "offene Schleife", "ANLAUF" -Zustand zum "geschlossene Schleife", "BETRIEB" -Zustand.

3. Verfahren nach Anspruch 1 oder 2, ferner umfassend:

- das Detektieren einer plötzlichen Steigerung in der Motorgeschwindigkeit, gefolgt von einem Verlust von erforderlichem Motorstrom, "Lastabfalldetektion".

4. Verfahren nach Anspruch 2, ferner umfassend:

- Messen, ob die Motorgeschwindigkeit tatsächlich innerhalb 200 ms nach dem Eintreten in den "BETRIEB" -Zustand ansteigt.

5. Verfahren nach Anspruch 3, weiter umfassend die folgenden Schritte:

- kontinuierliches Messen der tatsächlichen Motorgeschwindigkeit, und
- wenn die Geschwindigkeit mit mehr als einem definierten Wert innerhalb von 100 ms ansteigt, Prüfen des erforderlichen Motorstroms innerhalb von den nachfolgenden 300 ms; und
- wenn der erforderliche Motorstrom auf weniger als die Hälfte des Motorstroms reduziert wird, der vor der Geschwindigkeitssteigerung erforderlich ist, wird es angenommen, dass der Lastabfall von einem gerissenen Antriebsriemen (4) verursacht wird.

6. Motorsystem umfassend:

- einen drehbaren Wärmetauscher (2), wobei der drehbare Wärmetauscher (2) mit einem Rotor eines Motors (3) durch einen Antriebsriemen (4) gekoppelt ist, so dass die Drehung des Rotors eine Drehung des drehbaren Wärmetauschers (2) bewirkt;
- wobei der Motor (3) mit einer Verarbeitungseinheit (5) verbunden ist, **dadurch gekennzeichnet, dass** die Verarbeitungseinheit (5) für das regelmäßige Messen in Intervallen jede 5 bis 60 Sekunden einer Schrittbeschleunigungsantwort des Motors, nachdem eine plötzliche Zunahme von Motorstrom eingesetzt worden ist, und dass die Verarbeitungseinheit (5) mit einem sensorfreien Steuerungsmotor (3) der feldorientierten Regelung versehen ist.

7. Motorsystem nach Anspruch 6, wobei die Verarbeitungseinheit (5) weiter für Folgendes ausgelegt ist:

- das Detektieren eines Geschwindigkeitsschritts unmittelbar nach einer Änderung vom "offene Schleife", "ANLAUF" -Zustand zum "geschlossene Schleife", "BETRIEB" -Zustand.

8. Motorsystem nach Anspruch 6 oder 7, wobei die Verarbeitungseinheit (5) weiter für Folgendes ausgelegt ist:

- das Detektieren einer plötzlichen Zunahme in der Motorgeschwindigkeit, gefolgt von einem Verlust von erforderlichem Motorstrom, "Lastabfalldetektion".

9. Motorsystem nach Anspruch 7, wobei die Verarbeitungseinheit (5) weiter für Folgendes ausgelegt ist:

- Messen, ob die Motorgeschwindigkeit tatsächlich innerhalb 200 ms nach dem Eintreten in den "BETRIEB" -Zustand ansteigt.

10. Motorsystem nach Anspruch 8, wobei die Verarbeitungseinheit (5) weiter für Folgendes ausgelegt ist:

- kontinuierliches Messen der tatsächlichen Motorgeschwindigkeit, und
- wenn die Geschwindigkeit mit mehr als einem definierten Wert innerhalb von 100 ms ansteigt, Prüfen des erforderlichen Motorstroms innerhalb von den nachfolgenden 300 ms; und
- wenn der erforderliche Motorstrom auf weniger als die Hälfte des Motorstroms reduziert wird, der vor der Geschwindigkeitssteigerung erforderlich ist, wird es angenommen, dass der Lastabfall von einem gerissenen Antriebsriemen (4) verursacht wird.

**Revendications**

1. Procédé pour détecter une courroie d'entraînement défectueuse (4) d'un système de moteur (1) comprenant un échangeur de chaleur rotatif (2), l'échangeur de chaleur rotatif (2) étant couplé à un rotor d'un moteur (3) par une courroie d'entraînement (4) si bien que la rotation du rotor entraîne la rotation de l'échangeur de chaleur rotatif (2), le moteur (3) étant raccordé à une unité de traitement (5), **caractérisé en ce qu'**il comprend l'étape de la mesure régulière par intervalles toutes les 5 à 60 secondes d'une réponse échelonnée d'accélération du moteur après avoir appliqué une augmentation soudaine de la demande de courant moteur, et **en ce que** l'unité de traitement (5) est pourvue d'un moteur contrôleur de commande à champ orienté sans capteur (3).

2. Procédé selon la revendication 1, comprenant en outre :

- la détection d'une étape de vitesse directement après un changement de l'état de "DEMARRAGE" "en boucle ouverte" à l'état de "FONCTIONNEMENT" "en boucle fermée".

3. Procédé selon la revendication 1 ou 2, comprenant en outre :

- la détection d'une augmentation soudaine de la vitesse du moteur, suivie d'une perte de courant moteur nécessaire ; une "détection de chute de charge".

4. Procédé selon la revendication 2, comprenant en outre :

- l'étape consistant à mesurer si la vitesse réelle du moteur augmente dans les 200 ms après le passage à l'état de "FONCTIONNEMENT".

5. Procédé selon la revendication 3, comprenant en outre les étapes consistant à :

- mesurer en continu la vitesse réelle du moteur, et
- si la vitesse augmente de plus d'une valeur définie dans les 100 ms, vérifier le courant moteur requis dans les 300 ms suivants ; et
- si le courant moteur requis est réduit à moins de la moitié du courant moteur requis avant l'augmentation de la vitesse, on suppose que la chute de charge est causée par une courroie d'entraînement déchirée (4).

6. Système de moteur, comprenant :

- un échangeur de chaleur rotatif (2), l'échangeur de chaleur rotatif (2) étant couplé à un rotor d'un moteur (3) par une courroie d'entraînement (4), si bien que la rotation du rotor provoque la rotation de l'échangeur de chaleur rotatif (2) ;
- le moteur (3) étant raccordé à une unité de traitement (5), **caractérisé en ce que** l'unité de traitement (5) est configuré pour mesurer régulièrement par intervalles toutes les 5 à 60 secondes une réponse échelonnée d'accélération du moteur après avoir appliqué une augmentation soudaine de la demande de courant de moteur, et **en ce que** l'unité de traitement (5) est pourvue d'un moteur contrôleur de commande à champ orienté sans capteur (3).

7. Système de moteur selon la revendication 6, l'unité de traitement (5) étant en outre configurée pour :

- détecter une étape de vitesse directement après un changement de l'état de "DEMARRAGE" "en boucle ouverte" à l'état de "FONCTIONNEMENT" "en boucle fermée".

8. Système de moteur selon la revendication 6 ou 7, l'unité de traitement (5) étant en outre configurée pour :

- détecter une augmentation soudaine de la vitesse du moteur, suivie d'une perte de courant moteur nécessaire, une "détection de chute de charge".

9. Système de moteur selon la revendication 7, l'unité de traitement (5) étant en outre configurée pour :

- mesurer si la vitesse réelle du moteur augmente dans les 200 ms après le passage à l'état "FONCTIONNEMENT".

10. Système de moteur selon la revendication 8, l'unité de traitement (5) étant en outre configurée pour :

- mesurer en continu la vitesse réelle du moteur, et
- si la vitesse augmente de plus d'une valeur définie dans les 100 ms, vérifier le courant moteur requis dans les 300 ms suivants ; et

si le courant moteur requis est réduit à moins de la moitié du courant moteur requis avant l'augmentation de la vitesse, on suppose que la chute de charge est causée par une courroie d'entraînement déchirée (4).

**Fig. 1**

20

21

Fig. 2

20'

21'

Fig. 3

**Fig. 4**

40

42

41

Fig. 5

40'

42'

41'

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 136346 B1
- EP 136346 A
- US 5281956 A
- WO 2006029608 A1